# FASCICULE DE BREVET EUROPEEN

(11) **EP 3 353 010 B1**
(45) Date de publication et mention de la délivrance du brevet: **04.12.2019**
(21) Numéro de dépôt: 16781510.9
(22) Date de dépôt: 19.09.2016
(51) Int. Cl.: B60N 2/32, B60N 2/20, B60N 2/18, A01B 75/00, B60N 2/02, B60N 2/38

(54) **SIÈGE ERGONOMIQUE BASCULANT ENTRE DEUX CONFIGURATIONS**
ERGONOMISCHE SITZNEIGUNG ZWISCHEN ZWEI KONFIGURATIONEN
ERGONOMIC SEAT TILTING BETWEEN TWO CONFIGURATIONS

(30) Priorité: 21.09.2015 FR 1558893
(43) Date de publication de la demande: 01.08.2018
(73) Titulaire: Touti Terre, 74150 Rumilly (FR)
(72) Inventeur: LACROUTS-CAZENAVE, Flore, Moye 74150 (FR); LACROUTS-CAZENAVE, Ivan, 49170 Saint Georges sur Loire (FR); LACROUTS-CAZENAVE, Laurence, 74150 Rumilly (FR)
(74) Mandataire: GIE Innovation Competence Group
(86) Numéro de dépôt international: PCT/FR2016/052371
(87) Numéro de publication internationale: WO 2017/051103

(56) Documents cités:
- FR-A1- 2 996 981
- US-A- 4 526 248
- US-A1- 2012 169 019

## Description

### DOMAINE TECHNIQUE

Le domaine technique de l'invention est le domaine des sièges, en particulier les sièges ergonomiques, pouvant se déployer sous différentes configurations. La principale application visée est l'adaptation à des postures de travail, notamment dans le domaine agricole, sachant que d'autres applications peuvent être envisagées, par exemple dans le domaine de la santé.

### ART ANTERIEUR

En dépit de l'accroissement de la mécanisation, concernant la plupart des secteurs industriels, certains travaux font toujours une large place à l'intervention humaine. C'est en particulier le cas du domaine agricole, et par exemple dans le domaine de l'agriculture biologique. Il est connu que dans un tel secteur, on cherche à limiter, voire éviter, le recours à des techniques nocives pour l'environnement, par exemple l'utilisation de pesticides ou de désherbants. En contrepartie, les exploitants sont amenés à effectuer manuellement certains travaux de désherbage, d'entretien ou des récoltes. C'est notamment le cas dans le domaine du maraîchage, impliquant de multiples opérations manuelles au contact ou à proximité du sol, ce qui implique un travail prolongé dans une posture accroupie, courbée ou à genoux. Cela rend le travail pénible, sans parler des conséquences possibles sur la santé : maux de dos, douleurs articulaires...

L'agriculture biologique actuellement connaît un certain essor, en réponse à une demande croissante de nombreux consommateurs de disposer de produits de qualité, cultivés dans le respect de l'environnement. Devant l'augmentation des surfaces cultivées à l'aide de procédés manuels, il est souhaitable de disposer d'outils ergonomiques, permettant aux cultivateurs d'effectuer des opérations manuelles dans des conditions confortables.

La demande FR-A-2 996 981 répond à ce besoin, en proposant un engin agricole motorisé, de conception simple, permettant à un agriculteur d'effectuer des opérations manuelles dans de multiples positions, tout en disposant d'un certain confort de travail.

Les inventeurs ont cherché à perfectionner cet engin, en proposant un siège encore plus ergonomique, et permettant de basculer aisément entre deux positions.

### EXPOSE DE L'INVENTION

Un premier objet de l'invention est un siège comprenant une assise et un dossier, le dossier comportant une face avant et une face arrière, l'assise étant apte à pivoter, autour d'un premier axe de rotation, entre une première position d'assise, définissant un premier plan d'assise, et une deuxième position d'assise, inclinée par rapport audit premier plan d'assise,
le siège étant caractérisé en ce que le dossier est apte à pivoter, autour d'un deuxième axe de rotation, parallèle audit premier axe de rotation, entre une première position de dossier, par exemple sensiblement perpendiculaire au premier plan d'assise, et une deuxième position de dossier, au cours de laquelle le dossier est sensiblement parallèle au premier plan d'assise, de telle sorte que le siège est apte à basculer :
- d'une première configuration, dite d'assise, selon laquelle l'assise et le dossier s'étendent selon leurs premières positions respectives ;
- à une deuxième configuration, dite d'appui, selon laquelle l'assise et le dossier s'étendent selon leurs deuxièmes positions respectives.

Lorsque le siège est déployé selon la première configuration, il est apte à recevoir une personne assise sur l'assise, et dont le dos est éventuellement apte à s'appuyer sur la face avant du dossier. Lorsque le siège est déployé selon la deuxième configuration, il est apte à recevoir une personne, en particulier en position allongée, dont le buste s'appuie sur la face arrière du dossier.

Le siège peut notamment être monté sur un engin agricole, auquel cas la position d'appui permet à un agriculteur de travailler à plat ventre, face au sol, pour effectuer des opérations manuelles. Un des avantages de ce siège est une manipulation particulièrement simple, permettant un basculement particulièrement simple entre la position assise et la position d'appui, puisqu'il suffit de faire pivoter le dossier et l'assise autour de leurs axes de rotation respectifs.

Selon un mode de réalisation lors du basculement entre la configuration d'assise et la configuration d'appui, l'assise et le dossier pivotent selon des sens de rotation opposés, respectivement autour desdits premier et deuxième axes de rotation.

Selon un mode de réalisation,
- dans la configuration d'assise, l'assise et le dossier définissent un premier angle supérieur à 70°, et de préférence inférieur à 130° ;
- dans la configuration d'appui, l'assise et le dossier définissent un deuxième angle supérieur à 120°, et de préférence inférieur à 180°, voire 160°.

Avantageusement, le siège peut comporter un mécanisme d'entraînement apte à entraîner simultanément un pivotement de l'assise et un pivotement du dossier. Ce mécanisme peut notamment être déclenché par un pivotement du dossier. Dans ce cas, de préférence, l'assise repose sur un support, dit support d'assise. Le mécanisme d'entraînement peut alors comporter :
- une première biellette, s'étendant selon une première direction longitudinale, perpendiculaire audit premier axe de rotation, entre une première extrémité, solidaire de l'assise et une deuxième extrémité, ladite première biellette comportant une lumière s'étendant selon ladite première direction longitudinale, ladite première biellette étant mobile en rotation autour d'un troisième axe de rotation, de préférence parallèle auxdits premier et deuxième axes de rotation, et solidaire de l'assise ;
- une barre transversale, solidaire du dossier, s'étendant transversalement à ladite lumière, et de préférence parallèlement auxdits premier et deuxième axes de rotation, et apte à coulisser, sous l'effet d'un pivotement du dossier, dans ladite lumière ;
- une deuxième biellette, s'étendant selon une deuxième direction longitudinale perpendiculaire audit premier axe de rotation, entre une première extrémité, solidaire dudit support d'assise et une deuxième extrémité, solidaire de ladite deuxième extrémité de ladite première biellette, et mobile en rotation par rapport à cette dernière, ladite deuxième biellette étant mobile en rotation autour d'un quatrième axe de rotation, solidaire dudit support d'assise, et de préférence parallèle au troisième axe de rotation, ainsi qu'autour d'un cinquième axe de rotation solidaire de ladite première biellette ;
- de telle sorte qu'une translation de la barre transversale dans la lumière entraîne une rotation de ladite première biellette ainsi qu'une rotation de ladite deuxième biellette la rotation de la première biellette s'effectuant selon un sens opposé à la rotation de la deuxième biellette.

Le siège peut comprendre une ou plusieurs caractéristiques suivantes, prises isolément ou selon les combinaisons techniquement réalisables :
- Lors du pivotement entre la première position d'assise et la deuxième position d'assise, l'assise subit une rotation, autour du premier axe de rotation, selon un premier angle de rotation compris entre 20° et 80°, et de préférence compris entre 30° et 60°.
- Lors du pivotement entre la première position de dossier et la deuxième position de dossier, le dossier subit une rotation, autour du deuxième axe de rotation, selon un deuxième angle de rotation compris entre 60° et 130°, et de préférence compris entre 70°, voire 80°, et 120° selon un sens de rotation inverse à au sens de rotation de l'assise.
- Le dossier s'étend entre une extrémité proximale et une extrémité distale, et comprend au niveau de ladite extrémité distale, un appui-tête, dont la distance par rapport à ladite extrémité proximale peut varier.
- Le siège est mobile selon un axe de rotation sensiblement perpendiculaire audit premier plan d'assise, autour duquel le siège est apte à tourner, dans l'une quelconque des configurations assise ou d'appui.
- Le siège repose sur un châssis, le siège étant mobile en translation par rapport audit châssis, de manière à se rapprocher ou à s'éloigner dudit châssis. Dans une telle configuration :
   ▪ la liaison entre le siège et le châssis peut être réalisée par un support comprenant un vérin hydraulique ;
   ▪ le siège peut être solidaire d'un cadre, de telle sorte que l'ensemble formant le siège et le cadre est mobile en translation par rapport au châssis.
- Le dossier du siège s'étend entre une extrémité proximale et deuxième extrémité distale, ladite extrémité proximale étant adjacente de l'assise, de telle sorte que la largeur du siège diminue entre ladite extrémité proximale et ladite extrémité distale. Cela facilite le passage des bras d'une personne dont le buste s'appuie sur le dossier, le siège étant disposé selon la configuration d'appui.

L'assise peut comporter un premier coussin, apte à permettre un appui durant la position d'assise ainsi que durant la position d'appui. Le dossier peut comprendre, sur sa face avant, un deuxième coussin apte à permettre un appui dorsal, ainsi que, sur sa face arrière, un troisième coussin apte à permettre un appui du buste d'une personne, ou appui thoracique. De préférence, le deuxième coussin et le troisième coussin sont disposés face à face, de part et d'autre d'une armature de dossier. De préférence, le deuxième et le troisième coussin prennent la forme d'une croix, similaire à la forme de la lettre X, s'étendant parallèlement au dossier à partir d'une partie centrale, de manière à permettre, lorsque le dossier est disposé selon la deuxième position du dossier, un passage des bras d'une personne de part et d'autre de ladite partie centrale.

Un autre objet de l'invention est un engin agricole, apte à se déplacer sur un sol, comportant un siège tel que décrit dans cette description.

Un autre objet de l'invention est un dispositif ergonomique, permettant le déplacement d'une personne, par exemple une personne handicapée, ou être destiné à une personne subissant une rééducation fonctionnelle, le dispositif comportant un siège tel que décrit dans cette description. Un autre objet de l'invention est un engin agricole, apte à se déplacer sur un sol, comportant un siège, apte à recevoir une personne en position assise, l'engin agricole comportant un châssis relié au siège par un support, le support permettant un mouvement de translation du siège par rapport au châssis, de façon à rapprocher ou éloigner le siège de ce châssis, l'engin étant caractérisé en ce que le siège est solidaire d'un cadre, ledit cadre s'étendant sensiblement parallèlement au sol, entre une extrémité avant et une extrémité arrière, le cadre étant configurer pour supporter des outils aptes à être en contact avec le sol.

Le siège peut notamment comporter l'une quelconque des caractéristiques présentées dans cette description.

L'invention sera mieux comprise à la lecture de la description des exemples de réalisation, présentée ci-après, laquelle s'appuie sur les figures suivantes.

### FIGURES

Les figures 1A et 1B représentent respectivement un mode de réalisation de l'invention, dans lequel le siège est disposé sur un engin apte à réaliser des opérations agricoles, en particulier de maraîchage. La figure 1B est une vue de côté de l'engin représenté sur la figure 1A.
Les figures 1C et 1D représentent respectivement un exemple d'engin agricole, comportant un siège selon l'invention, ce dernier étant respectivement configuré dans une configuration d'assise et une configuration d'appui.
Les figures 2A, 2B et 2C représentent respectivement un exemple de siège dans une configuration d'assise, une configuration intermédiaire et une configuration d'appui.
La figure 3 montre le siège représenté sur les figures 2A, 2B et 2C relié à un cadre, ce dernier pouvant servir de support à des outils.
Les figures 4A, 4B et 4C représentent un mécanisme d'entraînement, permettant au siège de basculer entre la configuration d'assise (figure 4A) vers la configuration d'appui (figure 4C), le mécanisme se trouvant dans les configurations correspondant respectivement aux figures 2A, 2B et 2C.
Les figures 5A, 5B, 5C, 5D à 5E représentent des vues de côté d'un siège passant progressivement de la configuration d'assise (figure 5A) à la configuration d'appui (figure 5E). Ces figures permettent de visualiser la cinématique des principaux composants du siège, en particulier l'assise et le dossier.
Les figures 6A, 6B, 6C, 6D et 6E représentent un exemple de mécanisme d'entraînement, dans des configurations correspondant respectivement aux figures 5A, 5B, 5C, 5D et 5E. Ces figures permettent de visualiser la cinématique du mécanisme d'entraînement permettant un pivotement de l'assise guidé par un pivotement du dossier.

Dans les figures, les mêmes références désignent les mêmes éléments.

### EXPOSE DE MODES DE REALISATION PARTICULIERS

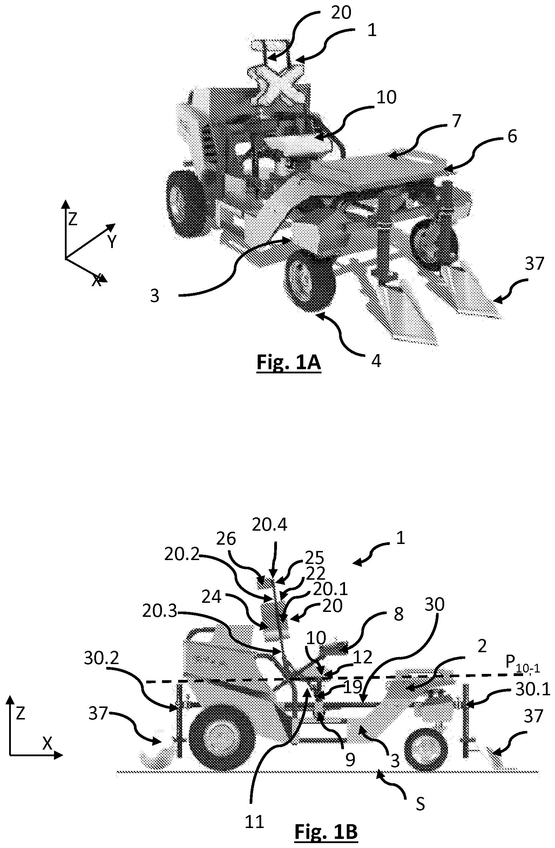

La figure 1A représente un exemple de siège 1 selon l'invention, disposé sur un engin agricole 2 destiné à des opérations de maraîchage. L'engin agricole comporte un châssis 3 supporté par quatre roues 4. Ces roues définissent deux à deux un essieu avant et un essieu arrière. L'engin peut être piloté par une personne assise sur le siège 1, ce dernier se trouvant dans une première configuration, dite configuration d'assise. Le siège comporte une assise 10, sur laquelle une personne peut s'asseoir, et un dossier 20, permettant un appui dorsal. L'engin comporte une plateforme 6, disposée à l'avant, permettant de déposer des outils ou des plateaux 7. L'engin peut supporter des outils 37 disposés à l'avant et/ou à l'arrière.

Dans l'ensemble des figures illustrant l'invention, on se réfère à un repère XYZ, dans lequel les axes X et Y définissent un plan horizontal, parallèle à la surface du sol sur lequel s'appuie l'engin, tandis que l'axe Z définit un plan vertical, perpendiculaire à la surface du sol.

La figure 1B représente une vue de côté de l'engin agricole représenté sur la figure 1A. L'assise 10 s'étend selon un plan P₁₀₋₁, dit premier plan d'assise, et le dossier 20 s'étend sensiblement orthogonalement au premier plan d'assise. Par sensiblement orthogonalement, on entend formant un angle supérieur à 70°, et de préférence inférieur à 130°. Dans cet exemple, cet angle est de l'ordre de 100°.

Le siège 1 comporte un premier coussin 12 disposé au niveau de l'assise. Par ailleurs, le dossier comporte une première face 20.1, dite face avant, et une deuxième face 20.2, dite face arrière, opposée à la face avant. La face avant 20.1 du dossier est apte à former un appui dorsal lorsque le siège se trouve dans la configuration d'assise, comme cela est représenté sur la figure 1B. La face avant 20.1 peut comporter un deuxième coussin 22, de façon à améliorer le confort de la personne assise sur le siège. La face arrière 20.2 comporte un troisième coussin 24, faisant face au deuxième coussin 22. Ce troisième coussin est décrit plus en détail dans la suite de la description.

Le dossier s'étend entre une extrémité proximale 20.3, située à proximité de l'assise 10, et une extrémité distale 20.4. Cette extrémité distale 20.4 peut comporter un appui-tête 25, dont la distance par rapport à ladite extrémité proximale peut être rendue variable, afin de se conformer à la morphologie de la personne assise. Au niveau de cette extrémité distale, la face arrière 20.2 du dossier peut comprendre un quatrième coussin 26, dont la fonction est décrite ultérieurement. A l'instar de l'appui-tête 25, la distance entre ce quatrième coussin 26 et l'extrémité proximale 20.3 peut être ajustée.

Le siège 1 est fixé sur le châssis 3 par l'intermédiaire d'un support 19, ce dernier étant fixé à une embase 9 faisant partie du châssis 3. Dans cet exemple, le premier plan d'assise P₁₀₋₁, parfois dénommé plan d'assise, est parallèle au plan XY. Le support 19 s'étend transversalement, et de préférence perpendiculairement, au premier plan d'assise. Le support 19 permet ici une translation du siège 1 selon une direction transversale, et de préférence perpendiculaire, au premier plan d'assise P₁₀₋₁. Cela permet au siège de s'élever ou de se rabaisser par rapport au châssis 3. Ainsi, le siège peut s'éloigner ou se rapprocher d'un sol S le long duquel l'engin 2 est apte à se déplacer. Le siège 1 est également solidaire d'un cadre 30, s'étendant de part et d'autre du siège, entre une extrémité avant 30.1 et une extrémité arrière 30.2. Le cadre est fixé au siège par une liaison rigide. Ainsi, au cours de la translation du siège par rapport au châssis 3, le cadre est apte à s'éloigner ou se rapprocher du sol S. Les extrémités avant et arrière du cadre 30 permettent de supporter des outils agricoles 37, par exemple une charrue. Ainsi, le cadre 30 a une fonction de support d'outils, et sa translation transversalement, et de préférence perpendiculairement, au châssis 3, permet d'ajuster la distance entre lesdits outils agricoles 37 et le sol S sur lequel l'engin évolue.

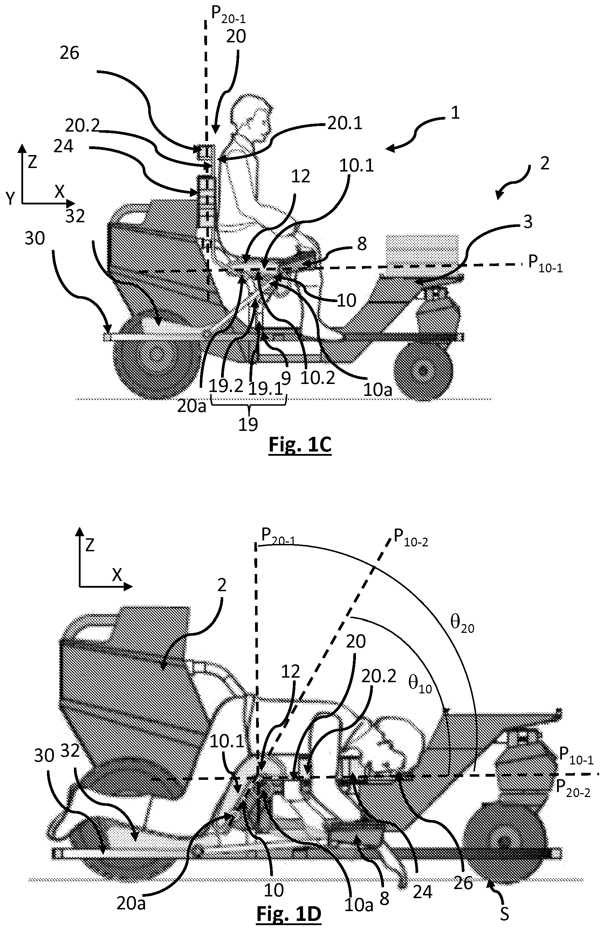

Le siège 1 comporte un mécanisme d'entraînement 11, lui permettant de basculer entre une configuration d'assise, telle que représentée sur les figures 1A, 1B et 1C, et une configuration dite d'appui, telle que représentée sur la figure 1D.

Le siège comporte également un bras à l'extrémité duquel se trouve une commande 8, permettant le pilotage de l'engin 2, et éventuellement le pilotage de la translation du siège par rapport au châssis 3.

La figure 1C représente une personne assise sur un siège 1, ce dernier équipant un engin 2 similaire à celui décrit en lien avec les figures 1A et 1B. Cette figure représente une vue de coupe obtenue selon un plan de coupe vertical et médian de l'engin, c'est-à-dire un plan parallèle aux axes X et Z et passant par le milieu de l'essieu arrière et par le milieu de l'essieu avant de l'engin 2.

La personne est assise sur le premier coussin 12 équipant l'assise 10, et son dos s'appuie sur la face avant 20.1 du dossier 20. L'assise comporte une face supérieure 10.1 et une face inférieure 10.2, de telle sorte qu'une personne assise s'appuie sur la face supérieure 10.1. Le siège est lié à un cadre 30, comme précédemment décrit. Le siège repose sur un support 19, assurant une liaison entre le siège et le châssis 3 de l'engin 2. Ce support 19 s'étend entre une première extrémité 19.1, adjacente du châssis 3, et une deuxième extrémité 19.2, adjacente de l'assise 10. Afin de permettre une translation du siège 1 par rapport au châssis selon l'axe Z, la première extrémité du support 19.1 comprend un moyen de translation, par exemple un vérin hydraulique. Ce vérin hydraulique peut notamment être commandé par la commande 8 précédemment décrite. Il s'insère dans une embase 9 ménagée dans le châssis 3. Le support 19 est également apte à permettre une rotation du siège 1 parallèlement au châssis 3, c'est-à-dire autour de l'axe Z, le vérin constituant lui-même l'axe de rotation.

Dans cet exemple, le cadre 30 s'étend selon un plan, dit plan de cadre. Il comporte un cinquième coussin 32, s'étendant sensiblement parallèlement à ce plan, dont la fonction est décrite en lien avec la figure 1D. Ainsi, le cadre a également une fonction de support du cinquième coussin 32. Sont également représentés, sur la figure 1C, le troisième coussin 24 et le quatrième coussin 26 précédemment décrits.

Le siège 1 comporte un premier axe de rotation 10a, parallèle à l'axe Y, autour duquel l'assise 10 est apte à pivoter, entre une première position d'assise et une deuxième position d'assise, inclinée par rapport à ladite première position d'assise. L'axe Y est perpendiculaire au plan XZ. La première position d'assise permet à une personne de s'asseoir sur l'assise, comme représenté sur les figures 1A, 1B et 1C. Dans la première position d'assise, l'assise s'étend selon le premier plan d'assise P₁₀₋₁. De préférence, le premier plan d'assise P₁₀₋₁ est sensiblement parallèle au plan XY. Dans la seconde position d'assise, l'assise s'étend selon un deuxième plan d'assise P₁₀₋₂, décrit en lien avec la figure 1D.

Le siège 1 comporte un deuxième axe de rotation 20a, autour duquel le dossier est apte à pivoter, entre une première position de dossier et une deuxième position de dossier, cette dernière étant sensiblement parallèle audit premier plan d'assise P₁₀₋₁. Le deuxième axe de rotation 20a est de préférence parallèle au premier axe de rotation 10a, et distinct de ce dernier. La première position du dossier permet à une personne assise de s'appuyer sur le dossier, comme représenté sur les figures 1A, 1B et 1C.

Dans sa première position, le dossier s'étend selon un premier plan de dossier P₂₀₋₁, tandis que dans sa deuxième position, le dossier s'étend selon un deuxième plan de dossier P₂₀₋₂, décrit en lien avec la figure 1D. De préférence, le premier plan de dossier P₂₀₋₁ est sensiblement orthogonal au premier plan d'assise P₁₀₋₁, le terme sensiblement orthogonal désignant une orthogonalité à une tolérance angulaire près, par exemple de plus ou moins 30 degrés.

Un des points importants de l'invention est que le siège est apte à basculer entre une première configuration, dite configuration d'assise, apte à accueillir une personne assise, et une deuxième configuration, dite configuration d'appui, sur laquelle peut s'appuyer une personne allongée. Par allongée, on entend dont le buste s'appuie sur une surface d'appui, cette surface étant sensiblement horizontale. Par sensiblement horizontale, on entend parallèle au sol, avec une tolérance angulaire de plus ou moins 30 degrés ou plus ou moins 20 degrés.

La figure 1D représente un siège identique à celui représenté sur la figure 1C, disposé selon ladite configuration d'appui. L'assise 10 est positionnée selon la deuxième position d'assise, précédemment évoquée, et s'étend selon un deuxième plan d'assise P₁₀₋₂ incliné par rapport audit premier plan d'assise P₁₀₋₁ selon un premier angle de rotation θ₁₀ de préférence compris entre 20° et 80°, et encore de préférence entre 30° et 60°, et par exemple égal à 60°.

Le dossier 20 est positionné selon la deuxième position de dossier, précédemment évoquée, et s'étend selon un deuxième plan de dossier P₂₀₋₂, sensiblement parallèle au premier plan d'assise P₁₀₋₁, c'est-à-dire parallèle à plus ou moins 30° près, voire plus ou moins 20° près. Dans cet exemple, le deuxième plan de dossier P₂₀₋₂ et le premier plan d'assise P₁₀₋₁ sont confondus. D'une façon générale, entre la première position de dossier et la deuxième position de dossier, le dossier 20 pivote autour du deuxième axe de rotation 20ₐ selon un deuxième angle de rotation θ₂₀ de préférence compris entre 60° et 130°, et encore de préférence entre 70°, voire 80° et 120°, et par exemple égal à 90°.

Lors du pivotement de leurs premières positions à leurs deuxièmes positions respectives, l'assise 10 et le dossier 20 pivotent, respectivement selon le premier et le deuxième axe de rotation, selon des sens de rotation opposés.

Le siège 1, dans la configuration d'appui, est apte à accueillir une personne en position dite d'appui. Le buste de cette personne s'appuie sur la face arrière 20.2 du dossier 20. De préférence, ses cuisses s'appuient sur l'assise 10, et notamment sur la face supérieure de l'assise 10.1. Dans cet exemple, comme précédemment décrit, la face arrière 20.2 comporte un troisième coussin 24, permettant un appui plus confortable. De préférence, le siège comporte un quatrième coussin 26, précédemment décrit, ce coussin servant d'appui frontal. Le cinquième coussin 32, porté par le cadre 30 relié au siège 1, permet un appui des jambes de la personne en position d'appui.

De cette façon, la personne prend appui sur la face arrière 20.2 du dossier 20 et se trouve face au sol S, dans une position allongée, c'est-à-dire en appui sur le buste. Elle peut alors effectuer des opérations manuelles au plus près du sol, tout en surplombant ce dernier. Elle se trouve alors dans une position particulièrement confortable pour travailler à même le sol, sans avoir à se courber, à s'accroupir ou à s'agenouiller. Une telle posture, particulièrement ergonomique, réduit significativement la pénibilité du travail.

Le bras reliant la commande 8 peut également pivoter, de façon à ce que la personne puisse piloter l'engin 2 en étant positionnée selon cette posture d'appui. En fonction de la nature du sol et/ou de la nature des travaux manuels à effectuer, la distance entre la personne et le sol peut être ajustée grâce au support 19, et en particulier au vérin hydraulique 19.1, permettant une translation perpendiculairement ou sensiblement perpendiculairement, au premier plan d'assise P₁₀₋₁. Cela permet une adaptation aisée de la position de la personne en fonction des conditions rencontrées.

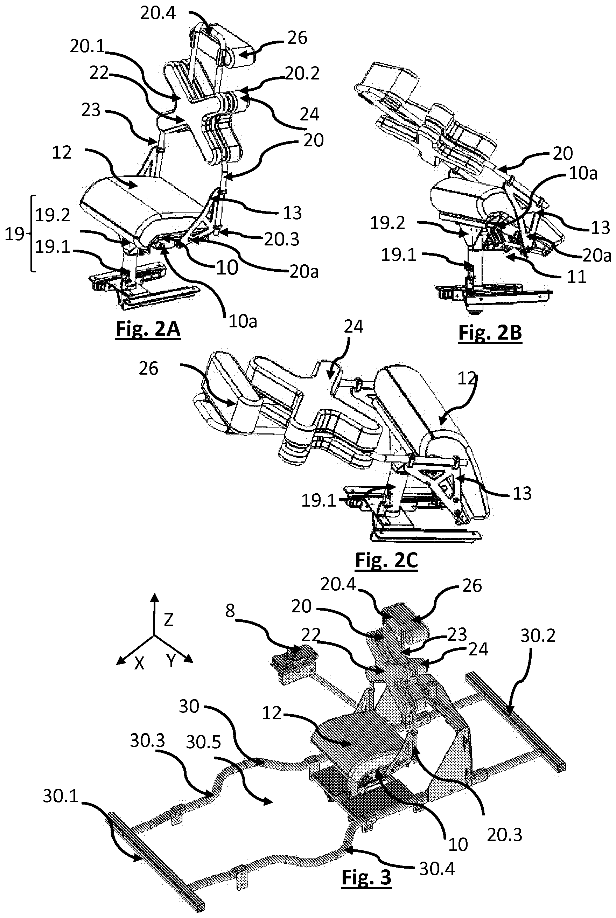

La figure 3 représente une vue en trois dimensions d'un siège 1 selon l'invention, dans la configuration assise. Le cadre 30, solidaire du siège, définit une forme sensiblement quadrilatère. Les parties avant 30.1 et arrière 30.2 sont reliées par deux longerons transversaux 30.3 et 30.4, s'étendant de part et d'autre du siège, de telle sorte que cadre s'étend selon un plan dit de plan de cadre. Dans cet exemple, le plan de cadre est parallèle au plan XY. Les longerons transversaux 30.3 et 30.4 définissent un élargissement local 30.5, de manière à permettre le passage des bras de la personne lorsque le siège se trouve en configuration d'appui, le cadre se trouvant entre le dossier 20, contre lequel s'appuie la personne, et le sol. Comme précédemment évoqué, le cadre comporte une extrémité avant 30.1 et une extrémité arrière 30.2 aptes à supporter des outils 37, ces derniers n'étant pas représentés sur cette figure. Cela permet d'effectuer une opération manuelle, le siège étant en configuration d'appui, simultanément à des opérations mécanisées à l'aide desdits outils 37, alors que l'engin se déplace. Cela permet également d'alterner des opérations mécanisées, le siège étant disposé selon sa configuration d'assise, et des opérations manuelles, le siège étant disposé selon sa configuration d'appui. Le cadre est dans cet exemple réalisé à l'aide de profilés métalliques ou des tubes, ce qui lui confère rigidité et légèreté.

De préférence, la largeur du dossier 20 est adaptée de façon à permettre un passage des bras, de part et d'autre de ce dernier, dans la configuration d'appui, comme on le comprend en regardant la figure 1D. Aussi, la largeur du dossier diminue entre son extrémité proximale 20.3 et son extrémité distale 20.4. Cela facilite le passage des bras en position d'appui, sans nuire au confort en position d'assise.

Les pivotements respectifs de l'assise et du dossier peuvent être réalisés successivement, l'un après l'autre. Mais il est préférable que ces pivotements soient effectués simultanément, de façon à faire rapidement basculer le siège entre la configuration d'assise et la configuration d'appui. Ces pivotements simultanés peuvent être effectués par un système mécanique d'entraînement 11, comme représenté sur les figures 2A, 2B et 2C.

La figure 2A représente un exemple de siège en configuration assise. Comme on peut le voir sur les figures 2A et 3, le dossier 20 comporte une structure métallique tubulaire 23, dont la largeur diminue entre l'extrémité proximale 20.3 et l'extrémité distale 20.4. La face avant 20.1 du dossier 20 comporte un deuxième coussin 22, permettant un appui dorsal lorsque le siège est placé en configuration assise. La face arrière 20.2 comporte un troisième coussin 24 ainsi qu'un quatrième coussin 26 permettant respectivement un appui du buste (ou appui thoracique), ainsi qu'un appui frontal lorsque le siège est en configuration d'appui. Dans cette dernière configuration, la forme du deuxième coussin 22 et du troisième coussin 24 peut être adaptée, de manière à faciliter le passage des bras de part et d'autre du dossier. Par exemple, ces deux coussins peuvent prendre la forme d'une croix, prenant la forme de la lettre X, dont les axes s'étendent à partir d'une partie centrale, constituant le centre du coussin. Les bras d'une personne en appui sur le troisième coussin 24 peuvent passer entre les axes d'une telle croix. Cette forme en croix s'avère optimale en termes de confort et d'encombrement.

Le siège 1 comporte également une liaison entre le dossier 20 et l'assise 10, assurée par deux équerres latérales 13, en travers desquelles s'étend le deuxième axe de rotation 20a, autour duquel pivote le dossier 20. Le siège est apte à être relié à un châssis 3 par un support 19, comportant une partie inférieure 19.1, formant par exemple un vérin hydraulique, et une partie supérieure 19.2. Comme précédemment décrit, le vérin hydraulique permet une translation du siège selon un axe transversal au châssis (ou à l'assise 10), et éventuellement une rotation du siège dans un plan parallèle au plan du châssis (ou au plan de l'assise 10).

Le siège comporte un système d'entraînement 11 disposé sous l'assise 10, entre cette dernière et le support 19. Ce système d'entraînement 11 est relié au dossier par les équerres latérales 13. Il permet un pivotement simultané du dossier 20 et de l'assise 10, respectivement selon le deuxième axe de rotation 20a et le premier axe de rotation 10a. De préférence, le basculement du siège est commandé par le dossier 20, de telle sorte qu'un pivotement du dossier, déclenché par exemple manuellement, entraîne le pivotement de l'assise, et cela de la configuration d'assise vers la configuration d'appui ou, inversement, de la configuration d'appui vers la configuration d'assise.

La figure 2B illustre le siège dans une configuration dite intermédiaire, entre la configuration d'assise et la configuration d'appui. La figure 2C représente le siège dans la configuration d'appui. On remarque que le pivotement du dossier 20 autour du deuxième axe de rotation 20a s'effectue selon un sens de rotation inverse au pivotement de l'assise 10 autour du premier axe de rotation 10a.

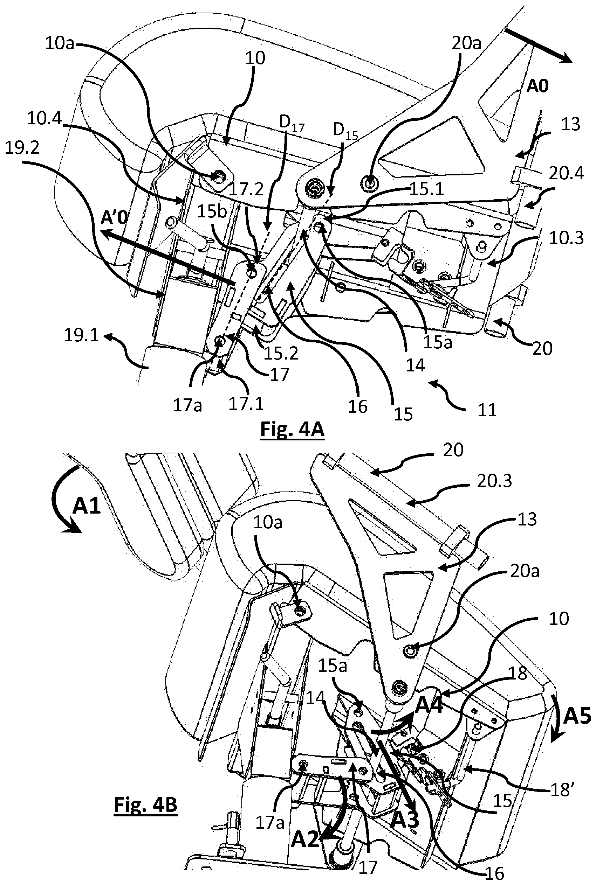

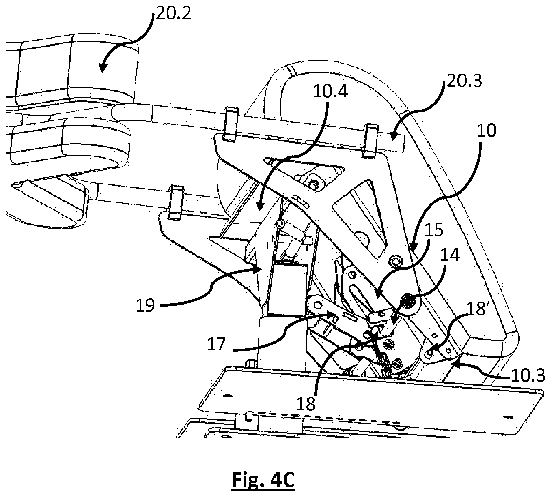

On va à présent détailler, en lien avec les figures 4A, 4B et 4C un exemple, non limitatif, d'un système de transmission 11 apte à permettre les pivotements simultanés précédemment décrits. La figure 4A représente le siège 1 déployé selon une configuration d'assise. L'assise s'étend entre une extrémité arrière 10.3, adjacente du dossier 20 (et notamment de son extrémité proximale 20.3) lorsque le siège est déployé selon la configuration d'assise, et une extrémité avant 10.4. Le système de transmission 11 comporte :
- une barre transversale 14, s'étendant entre les équerres latérales 13, et maintenues par ces dernières, et par conséquent solidaire du dossier 20. Cette barre transversale s'étend parallèlement aux premier et deuxième axes de rotation.
- une première biellette 15, s'étendant, selon une première direction longitudinale D₁₅, entre une première extrémité 15.1, solidaire de l'assise 10, et une deuxième extrémité 15.2, cette biellette comportant une lumière 16 s'étendant selon ladite première direction longitudinale D₁₅, entre les extrémités 15.1 et 15.2.
- une deuxième biellette 17, s'étendant selon une deuxième direction longitudinale D₁₇, entre une première extrémité 17.1, solidaire du support 19, et une deuxième extrémité 17.2.

La barre transversale s'étend transversalement à la lumière 16, dans laquelle elle est apte à coulisser. La première biellette 15 est mobile en rotation autour d'un troisième axe de rotation 15a, parallèle aux premier et deuxième axes de rotation. Dans cet exemple, ce troisième axe de rotation constitue une liaison entre la première biellette 15 et l'assise 10, au niveau de la première extrémité 15.1 de cette première biellette.

La deuxième biellette 17 est mobile en rotation autour d'un quatrième axe de rotation 17a, parallèle au troisième axe de rotation 15a. Dans cet exemple, ce quatrième axe de rotation constitue une liaison entre la deuxième biellette 17 et le support 19, au niveau de la première extrémité 17.1 de cette deuxième biellette.

La première biellette 15 et la deuxième biellette 17 sont liées l'une à l'autre, au niveau de leurs deuxièmes extrémités respectives 15.2 et 17.2, par une liaison libre en rotation définissant un cinquième axe de rotation 15b, parallèle au troisième axe de rotation 15a et au quatrième axe de rotation 17a.

Dans la configuration représentée sur la figure 4A, une personne s'asseyant sur le siège et s'appuyant sur le dossier 20 exerce une force A0 sur le dossier, tendant à maintenir la barre transversale 14 en appui contre la première extrémité 15.1 de la première biellette, et, par l'intermédiaire de la première biellette 15, à pousser la deuxième biellette 17 vers le support 19, en exerçant une force de poussée A'0. Le support 19 constitue alors une première butée, permettant de maintenir l'assise 10 et le dossier 20 dans leurs premières positions respectives.

Dans la configuration représentée sur la figure 4B, dite intermédiaire, le dossier 20 a été incliné de façon à se rapprocher de l'assise 10. La barre transversale 14 coulisse alors dans la lumière 16, selon la direction A3, entraînant une rotation de la première biellette 15, autour du troisième axe de rotation 15a, selon un sens de rotation A4. Cela entraîne également une rotation de la deuxième biellette 17 selon un sens de rotation A2, opposé au sens de rotation A4, autour du quatrième axe de rotation 17a. Le frottement de la biellette le long de la lumière 16 entraîne la rotation de l'assise 10 selon un sens de rotation A5 opposé au sens de rotation A1 du dossier. La première biellette 15 et la deuxième biellette 17 restent liées l'une à l'autre, et pivotent, l'une par rapport à l'autre, autour du cinquième axe de rotation 15b.

La figure 4C représente le siège déployé selon la configuration d'appui, dans laquelle la première biellette 15 est bloquée en rotation contre l'assise 10, cette dernière ayant alors une fonction de deuxième butée, permettant de maintenir l'assise 10 et le dossier 20 dans leurs deuxièmes positions respectives. Une personne s'appuyant sur la face arrière 20.2 du dossier 20 tend à diriger la deuxième biellette 15 en direction de l'assise 10, ce qui tend à maintenir le siège selon la configuration d'appui. Selon la configuration d'appui, l'extrémité proximale 20.3 du dossier 20 est adjacente de l'extrémité avant 10.4 de l'assise 10, alors que dans la configuration d'assise, l'extrémité proximale 20.3 du dossier est adjacente de l'extrémité arrière 10.3 de l'assise.

De façon avantageuse, la mécanique d'entraînement 11 comporte une gâche 18, dans laquelle la barre transversale s'engage lorsque l'assise atteint sa deuxième position. Cette gâche 18 forme alors un verrouillage complémentaire de cette position. La barre transversale 14 peut être libérée de la gâche par un levier 18', visible sur la figure 4B, permettant le déverrouillage de la gâche 18.

Le passage de la configuration d'appui à la configuration d'assise s'effectue en ramenant le dossier de sa deuxième position vers sa première position. La barre transversale 14 coulisse alors dans la lumière 16 selon un sens opposé au sens A3 précédemment décrit, en lien avec la figure 4B. Le déplacement de la barre combiné à la rotation des première et deuxième biellettes permet de ramener l'assise de sa deuxième position vers sa première position.

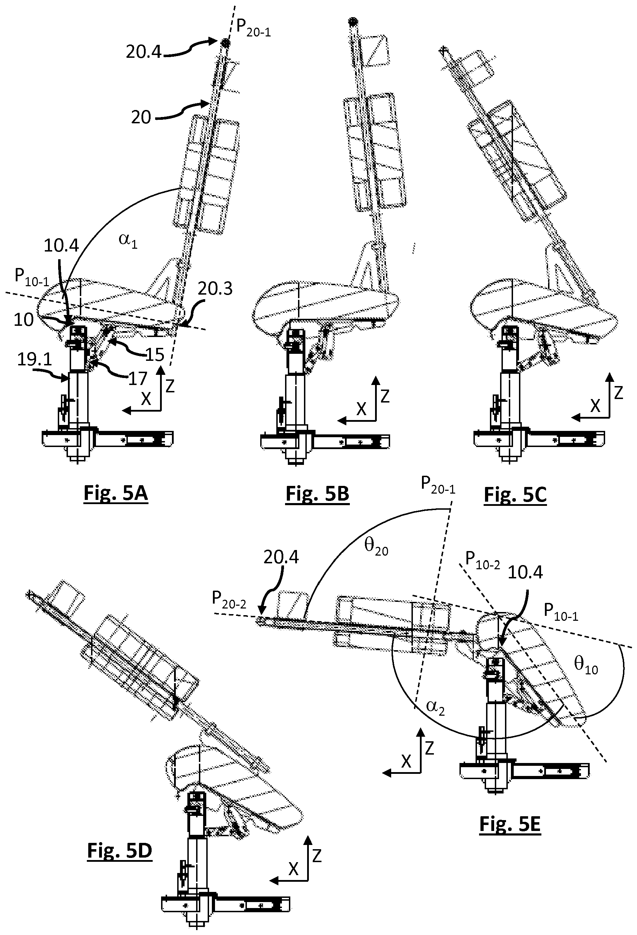

Les figures 5A à 5E montrent différentes configurations du siège, entre une configuration d'assise, dessinée sur la figure 5A, et une configuration d'appui, représentée sur la figure 5E. Les configurations intermédiaires apparaissant sur les figures 5B, 5C et 5D permettent d'appréhender la cinématique du basculement du siège 1 entre les configurations d'assise et d'appui, et en particulier la rotation de l'assise 10 et du dossier 20, ainsi que les rotations des biellettes 15 et 17.

Sur la figure 5A, on a représenté l'angle α₁ s'étendant entre le premier plan d'assise P₁₀₋₁ et le dossier, s'étendant selon le premier plan de dossier P₂₀₋₁, dans la configuration d'assise. Cet angle est ici voisin de 90°. Il est généralement compris entre 70° et 130°, et est de préférence compris entre 70°, voire 80° ou 90°, et 120° ou 130 °. Les figures 5B, 5C et 5D permettent d'observer qu'au cours du pivotement de la configuration d'assise vers la configuration d'appui, le dossier pivote autour du deuxième axe de rotation 20a, de telle sorte que l'extrémité distale 20.4 du dossier se rapproche de l'assise 10, et notamment de l'extrémité avant 10.4 de l'assise 10. Sur la figure 5E, on a représenté l'angle α₂ s'étendant entre l'assise et le dossier dans la configuration d'appui. Cet angle est ici voisin de 120°. Il est généralement compris entre 100° et 160°. Cela permet d'accueillir une personne en position allongée, dont le buste s'appuie sur la face arrière du dossier 20.2 et dont les cuisses s'appuient sur l'assise 10, comme précédemment décrit. On comprend que le siège, dans cette configuration d'appui, permet une position de travail, face au sol, particulièrement confortable.

On a également représenté, sur la figure 5E, les premier et deuxième angles de rotation θ₁₀ et θ₂₀ correspondant respectivement à la rotation de l'assise 10 autour du premier axe de rotation 10a et du dossier 20 autour du deuxième axe de rotation 20a. Le premier angle de rotation θ₁₀ est ici égal à 45°. Il est généralement compris entre 20° et 80°, et de préférence compris entre 30° et 60°. Le deuxième angle de rotation θ₂₀ est ici égal à 100°. Il est généralement compris entre 60° et 130°, et de préférence compris entre 70°, voire 80° et 120°.

Comme précédemment décrit, le support 19 comporte un vérin hydraulique 19.1 permettant une translation du siège selon l'axe Z, transversalement au premier plan d'assise P₁₀₋₁. De préférence, cette translation s'effectue sensiblement perpendiculairement au premier plan d'assise. Cette translation peut être effectuée dans les deux configurations du siège. Le support 19 permet également une rotation du siège 1 dans un plan XY, autour d'un axe de rotation parallèle à l'axe Z, et cela dans les deux configurations du siège.

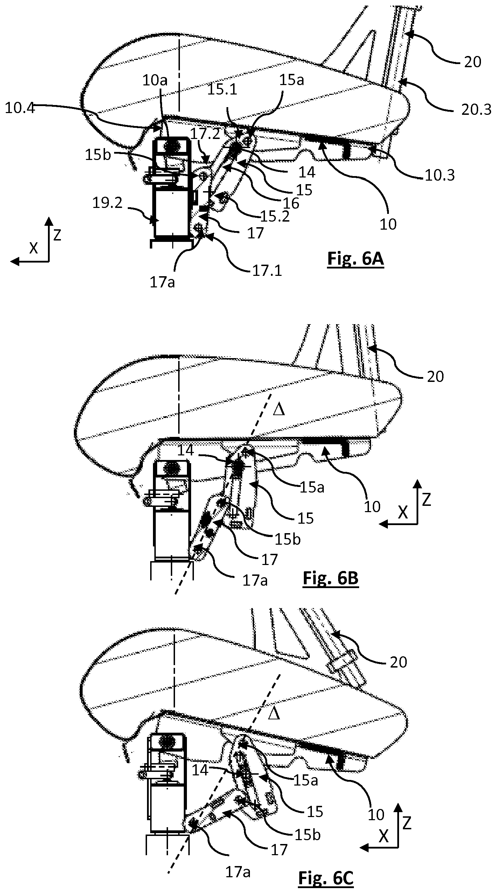

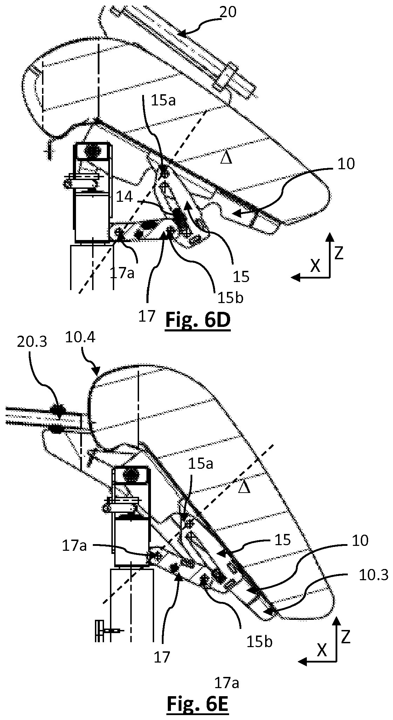

Les figures 6A, 6B, 6C, 6D et 6E représentent respectivement des détails du mécanisme d'entraînement 11 dans les configurations correspondant aux figures 5A, 5B, 5C, 5D et 5E. Ces figures permettent d'appréhender les déplacements de la barre transversale 14, de la première biellette 15 et de la deuxième biellette 17 entre la configuration d'assise (figure 6A) et la configuration d'appui (figure 6E). Comme précédemment évoqué, dans la configuration d'assise, le support 19 fait fonction de première butée. La deuxième biellette 17 s'appuyant sur le support, sous l'effet d'une force exercée par la première biellette 15, la barre transversale 14 s'appuyant vers la première extrémité 15.1 de cette première biellette sous l'action du dossier 20.

Les troisième et quatrième axes de rotation 15a et 17a sont alignés selon une ligne, dite ligne inter-axes Δ. On considère ici que l'axe Z correspond à l'axe vertical, ou est sensiblement parallèle à l'axe vertical. Tant que le cinquième axe de rotation 15b est situé entre cette ligne inter-axes et le support 19, la deuxième biellette 17 tend à pivoter spontanément, autour du quatrième axe de rotation 17a, vers le support 19 sous l'effet de la gravité exercée sur le dossier ou sur l'assise. La figure 6B représente une configuration intermédiaire particulière dans laquelle les troisième, quatrième et cinquième axes de rotation 15a, 17a et 15b sont alignés, selon la ligne inter-axes Δ. Cette figure correspond au cas où le cinquième axe de rotation 15b franchit cette ligne Δ. Sur les figures 6C, 6D et 6E, le cinquième axe de rotation 15b se situe dans un demi-espace délimité par la ligne inter-axes Δ et ne comprenant pas le support 19. La gravité tend à entraîner les biellettes 15 et 17, ainsi que la barre transversale 14 vers la configuration d'appui représentée sur la figure 6E. On comprend que le mécanisme d'entraînement 11 nécessite peu d'effort pour effectuer un basculement entre la position d'assise et la position d'appui, car dès lors que le cinquième axe de rotation passe d'un côté ou de l'autre de la ligne inter-axes Δ, la gravité contribue au basculement, dans un sens ou dans l'autre.

La figure 6E permet d'observer que dans la configuration d'assise, la première biellette 15 s'appuie contre l'assise 10, cette dernière faisant office de deuxième butée. Des logements sont ménagés dans l'assise 10, destinés à recevoir la barre transversale dans la configuration d'assise et dans la configuration d'appui. Cela permet d'éviter une éventuelle torsion de la barre transversale.

Bien que décrit en lien avec une utilisation sur un engin agricole, le siège objet de l'invention peut avoir d'autres utilisations pour améliorer l'ergonomie de travaux manuels, par exemple dans la pose d'un carrelage sur une surface étendue. Par ailleurs, un engin peut recevoir non pas un seul siège, comme décrit dans les figures jointes à cette description, mais une pluralité de sièges.

Un tel siège peut également être utile dans le domaine de la santé, en étant destiné à des personnes handicapées, à mobilité réduite, ou subissant une rééducation fonctionnelle. Son maniement très simple permet d'alterner entre une configuration d'assise et une configuration ergonomique d'appui thoracique. Cette dernière permet de soulager la pression appliquée à certaines parties corporelles, par exemple le bas des cuisses ou le bas du dos, lors d'une position assise trop prolongée. Ainsi, une personne peut alterner entre une position assise et une position ergonomique couchée.

## Revendications

1. Siège (1) comprenant une assise (10) et un dossier (20), le dossier comportant une face avant (20.1) et une face arrière (20.2), l'assise étant apte à pivoter, autour d'un premier axe de rotation (10a), entre une première position d'assise, définissant un premier plan d'assise (P₁₀₋₁), et une deuxième position d'assise, inclinée par rapport audit premier plan d'assise,
le siège (10) étant **caractérisé en ce que** le dossier (20) est apte à pivoter, autour d'un deuxième axe de rotation (20a), parallèle audit premier axe de rotation (10a) entre une première position de dossier et une deuxième position de dossier, cette dernière étant sensiblement parallèle au premier plan d'assise (P₁₀₋₁), de telle sorte que le siège est apte à basculer :
- d'une première configuration, dite d'assise, selon laquelle l'assise (10) et le dossier (20) s'étendent selon leurs premières positions respectives, le siège étant alors apte à recevoir une personne assise sur l'assise (10) ;
- à une deuxième configuration, dite d'appui, selon laquelle l'assise et le dossier s'étendent selon leurs deuxièmes positions respectives, le siège étant apte à recevoir une personne, dont le buste s'appuie sur ladite face arrière (20.2) dudit dossier (20).

2. Siège selon la revendication 1, dans lequel lors du basculement entre la configuration d'assise et la configuration d'appui, l'assise (10) et le dossier (20) pivotent selon des sens de rotation opposés, respectivement autour desdits premier et deuxième axes de rotation (10a, 20a).

3. Siège selon l'une quelconque des revendications précédentes, dans lequel :
- dans la configuration d'assise, l'assise et le dossier définissent un premier angle (α₁) supérieur à 70° ;
- dans la configuration d'appui, l'assise et le dossier définissent un deuxième angle (α₂) supérieur à 110° et inférieur à 180°.

4. Siège selon l'une quelconque des revendications précédentes, comportant un mécanisme d'entraînement (11) apte à entraîner simultanément un pivotement de l'assise (10) et le pivotement du dossier (20).

5. Siège selon la revendication précédente, dans lequel ledit mécanisme d'entraînement (11) est déclenché par le pivotement du dossier (20).

6. Siège selon la revendication précédente, dans lequel l'assise (10) repose sur un support, dit support d'assise (19), et dans lequel ledit mécanisme d'entraînement comporte :
- une première biellette (15), s'étendant selon une première direction longitudinale (D₁₅), perpendiculaire audit premier axe de rotation (10a), entre une première extrémité (15.1), solidaire de l'assise (10), et une deuxième extrémité (15.2), ladite première biellette comportant une lumière (16) s'étendant selon ladite première direction longitudinale (D₁₅), ladite première biellette étant mobile en rotation autour d'un troisième axe de rotation (15a), solidaire de l'assise ;
- une barre transversale (14), solidaire du dossier (20), s'étendant transversalement à ladite lumière (16), et apte à coulisser, sous l'effet d'un pivotement du dossier (20), dans ladite lumière (16) ;
- une deuxième biellette (17), s'étendant selon une deuxième direction longitudinale (D₁₇) perpendiculaire audit premier axe de rotation (10a), entre une première extrémité (17.1), solidaire dudit support d'assise (19), et une deuxième extrémité (17.2), solidaire de la deuxième extrémité (15.2) de la première biellette (15), ladite deuxième biellette étant mobile en rotation autour d'un quatrième axe de rotation (17a), solidaire dudit support d'assise (19), ainsi qu'autour d'un cinquième axe de rotation (15b) solidaire de ladite première biellette (15);
- de telle sorte qu'une translation de la barre transversale (14) dans ladite lumière (16) entraîne une rotation de ladite première biellette (15) et une rotation de ladite deuxième biellette (17), la rotation de la première biellette s'effectuant selon un sens opposé à la rotation de la deuxième biellette.

7. Siège, selon l'une quelconque des revendications précédentes, comportant au moins l'une des caractéristiques suivantes :
- lors du pivotement entre la première position d'assise et la deuxième position d'assise, l'assise (10) subit une rotation, autour du premier axe de rotation (10a) selon un premier angle de rotation (θ₁₀) compris entre 20° et 80°;
- lors du pivotement entre la première position de dossier et la deuxième position de dossier, le dossier (20) subit une rotation, autour du deuxième axe de rotation (20a) selon un deuxième angle de rotation (θ₂₀) compris entre 60° et 130°.

8. Siège selon l'une quelconque des revendications précédentes, dans lequel le dossier s'étend entre une extrémité proximale (20.3) et une extrémité distale (20.4), le dossier comprenant un appui appui-tête (25), disposé au niveau de ladite extrémité distale (20.4), dont la distance, vis-à-vis de ladite extrémité proximale (20.3), peut varier.

9. Siège selon l'une quelconque des revendications précédentes, comportant un axe de rotation transversal audit premier plan d'assise (P₁₀₋₁), autour duquel le siège est apte à tourner, dans l'une quelconque des configurations d'assise ou d'appui.

10. Siège selon l'une quelconque des revendications précédentes, reposant sur un châssis (3), le siège étant mobile en translation par rapport audit châssis, de manière à se rapprocher ou à s'éloigner dudit châssis.

11. Siège selon la revendication précédente, le siège étant solidaire d'un cadre (30), de telle sorte que l'ensemble formant le siège (1) et le cadre (30) est mobile en translation par rapport audit châssis (3).

12. Engin agricole, apte à se déplacer sur un sol, comportant un siège selon l'une quelconque des revendications précédentes.

## Patentansprüche

1. Sitz (1), welcher eine Sitzfläche (10) und eine Rückenlehne (20) umfasst, wobei die Rückenlehne eine Vorderseite (20.1) und eine Rückseite (20.2) aufweist, wobei die Sitzfläche in der Lage ist, um eine erste Drehachse (10a) zwischen einer ersten Sitzflächenposition, die eine erste Sitzflächenebene (P₁₀₋₁) definiert, und einer zweiten Sitzflächenposition, die bezüglich der ersten Sitzflächenebene geneigt ist, zu schwenken,
wobei der Sitz (10) **dadurch gekennzeichnet ist, dass** die Rückenlehne (20) in der Lage ist, um eine zweite Drehachse (20a), die zur ersten Drehachse (10a) parallel ist, zwischen einer ersten Rückenlehnenposition und einer zweiten Rückenlehnenposition zu schwenken, wobei diese Letztere im Wesentlichen parallel zur ersten Sitzflächenebene (P₁₀₋₁) ist, derart, dass der Sitz in der Lage ist zu kippen:
- aus einer ersten Konfiguration, Sitzkonfiguration genannt, in welcher sich die Sitzfläche (10) und die Rückenlehne (20) in ihren jeweiligen ersten Positionen erstrecken, wobei der Sitz dann in der Lage ist, eine auf der Sitzfläche (10) sitzende Person aufzunehmen,
- in eine zweite Konfiguration, Stützkonfiguration genannt, in welcher sich die Sitzfläche und die Rückenlehne in ihren jeweiligen zweiten Positionen erstrecken, wobei der Sitz in der Lage ist, eine Person aufzunehmen, deren Oberkörper sich auf die Rückseite (20.2) der Rückenlehne (20) stützt.

2. Sitz nach Anspruch 1, wobei beim Kippen zwischen der Sitzkonfiguration und der Stützkonfiguration die Sitzfläche (10) und die Rückenlehne (20) in entgegengesetzten Drehrichtungen um ihre erste bzw. zweite Drehachse (10a, 20a) schwenken.

3. Sitz nach einem der vorhergehenden Ansprüche, wobei:
- in der Sitzkonfiguration die Sitzfläche und die Rückenlehne einen ersten Winkel (α₁) definieren, der größer als 70° ist;
- in der Stützkonfiguration die Sitzfläche und die Rückenlehne einen zweiten Winkel (α₂) definieren, der größer als 110° und kleiner als 180° ist.

4. Sitz nach einem der vorhergehenden Ansprüche, welcher einen Antriebsmechanismus (11) aufweist, der in der Lage ist, gleichzeitig eine Schwenkung der Sitzfläche (10) und die Schwenkung der Rückenlehne (20) anzutreiben.

5. Sitz nach dem vorhergehenden Anspruch, wobei der Antriebsmechanismus (11) durch die Schwenkung der Rückenlehne (20) ausgelöst wird.

6. Sitz nach dem vorhergehenden Anspruch, wobei die Sitzfläche (10) auf einem Träger ruht, Sitzflächenträger (19) genannt, und wobei der Antriebsmechanismus aufweist:
- einen ersten Schwingarm (15), der sich in einer ersten Längsrichtung (D₁₅), die zu der ersten Drehachse (10a) senkrecht ist, zwischen einem ersten Ende (15.1), das mit der Sitzfläche (10) fest verbunden ist, und einem zweiten Ende (15.2) erstreckt, wobei der erste Schwingarm eine Öffnung (16) aufweist, die sich in der ersten Längsrichtung (D₁₅) erstreckt, wobei der erste Schwingarm drehbeweglich um eine dritte Drehachse (15a) ist, die mit der Sitzfläche fest verbunden ist;
- eine Querstange (14), die mit der Rückenlehne (20) fest verbunden ist, sich quer zu der Öffnung (16) erstreckt und in der Lage ist, unter der Einwirkung einer Schwenkung der Rückenlehne (20) in der Öffnung (16) zu gleiten;
- einen zweiten Schwingarm (17), der sich in einer zweiten Längsrichtung (D₁₇), die zu der ersten Drehachse (10a) senkrecht ist, zwischen einem ersten Ende (17.1), das mit dem Sitzflächenträger (19) fest verbunden ist, und einem zweiten Ende (17.2), das mit dem zweiten Ende (15.2) des ersten Schwingarmes (15) fest verbunden ist, erstreckt, wobei der zweite Schwingarm drehbeweglich um eine vierte Drehachse (17a) ist, die mit dem Sitzflächenträger (19) fest verbunden ist, sowie um eine fünfte Drehachse (15b), die mit dem ersten Schwingarm (15) fest verbunden ist;
- derart, dass eine Translation der Querstange (14) in der Öffnung (16) eine Drehung des ersten Schwingarmes (15) und eine Drehung des zweiten Schwingarmes (17) zur Folge hat, wobei die Drehung des ersten Schwingarmes in einer Richtung erfolgt, die zur Drehung des zweiten Schwingarmes entgegengesetzt ist.

7. Sitz nach einem der vorhergehenden Ansprüche, welcher wenigstens eines der folgenden Merkmale aufweist:
- Bei der Schwenkung zwischen der ersten Sitzflächenposition und der zweiten Sitzflächenposition erfährt die Sitzfläche (10) eine Drehung um die erste Drehachse (10a) um einen ersten Drehwinkel (θ₁₀), der zwischen 20° und 80° liegt;
- bei der Schwenkung zwischen der ersten Rückenlehnenposition und der zweiten Rückenlehnenposition erfährt die Rückenlehne (20) eine Drehung um die zweite Drehachse (20a) um einen zweiten Drehwinkel (θ₂₀), der zwischen 60° und 130° liegt.

8. Sitz nach einem der vorhergehenden Ansprüche, wobei sich die Rückenlehne zwischen einem proximalen Ende (20.3) und einem distalen Ende (20.4) erstreckt, wobei die Rückenlehne eine am distalen Ende (20.4) angeordnete Kopfstütze (25) umfasst, deren Abstand vom proximalen Ende (20.3) variieren kann.

9. Sitz nach einem der vorhergehenden Ansprüche, welcher eine quer zur ersten Sitzflächenebene (P₁₀₋₁) verlaufende Drehachse aufweist, um welche sich der Sitz in einer beliebigen von der Sitz- oder der Stützkonfiguration drehen kann.

10. Sitz nach einem der vorhergehenden Ansprüche, welcher auf einem Fahrgestell (3) ruht, wobei der Sitz translatorisch bewegbar in Bezug auf das Fahrgestell ist, so dass er sich dem Fahrgestell nähern oder sich von ihm entfernen kann.

11. Sitz nach dem vorhergehenden Anspruch, wobei der Sitz mit einem Rahmen (30) fest verbunden ist, derart, dass die den Sitz (1) und den Rahmen (30) bildende Gesamtheit translatorisch bewegbar in Bezug auf das Fahrgestell (3) ist.

12. Landwirtschaftliches Gerät, das in der Lage ist, sich auf einem Boden zu bewegen, und einen Sitz nach einem der vorhergehenden Ansprüche aufweist.

## Claims

1. A chair (1) comprising a seat (10) and a backrest (20), the backrest comprising a front face (20.1) and a rear face (20.2), the seat being able to pivot, about a first axis of rotation (10a), between a first seat position defining a first seat plane (P₁₀₋₁) and a second seat position that is inclined with respect to said first seat plane,
the chair (10) being **characterized in that** the backrest (20) is able to pivot, about a second axis of rotation (20a) that is parallel to said first axis of rotation (10a), between a first backrest position and a second backrest position, the latter being essentially parallel to the first seat plane (P₁₀₋₁) such that the chair is able to switch:
- from a first configuration, referred to as the seating configuration, in which the seat (10) and the backrest (20) extend in their respective first positions, the chair then being suitable for receiving a person seated on the seat (10);
- to a second configuration, referred to as the support configuration, in which the seat and the backrest extend in their respective second positions, the chair being suitable for receiving a person whose chest rests on said rear face (20.2) of said backrest (20).

2. The chair as claimed in claim 1, in which, during switching between the seating configuration and the support configuration, the seat (10) and the backrest (20) pivot in opposite directions of rotation, respectively about said first and second axes of rotation (10a, 20a).

3. The chair as claimed in either one of the preceding claims, in which:
- in the seating configuration, the seat and the backrest define a first angle (α₁) greater than 70°;
- in the support configuration, the seat and the backrest define a second angle (α₂) greater than 110° and less than 180°.

4. The chair as claimed in any one of the preceding claims, comprising a drive mechanism (11) that is able to power, simultaneously, pivoting of the seat (10) and pivoting of the backrest (20).

5. The chair as claimed in any one of the preceding claims, in which said drive mechanism (11) is triggered by pivoting of the backrest (20).

6. The chair as claimed in the preceding claim, in which the seat (10) rests on a mount, referred to as the seat mount (19), and in which said drive mechanism comprises:
- a first connecting rod (15) extending in a first longitudinal direction (D₁₅) perpendicular to said first axis of rotation (10a), between a first end (15.1) fixed to the seat (10) and a second end (15.2), said first connecting rod comprising a slot (16) that extends in said first longitudinal direction (D₁₅), said first connecting rod being mobile in rotation about a third axis of rotation (15a) fixed to the seat;
- a transverse bar (14) fixed to the backrest (20) and extending transversely to said slot (16) and able to slide in said slot (16) when the backrest (20) pivots;
- a second connecting rod (17) extending in a second longitudinal direction (D₁₇) perpendicular to said first axis of rotation (10a), between a first end (17.1) fixed to said seat mount (19) and a second end (17.2) fixed to the second end (15.2) of the first connecting rod (15), said second connecting rod being mobile in rotation about a fourth axis of rotation (17a) fixed to said seat mount (19), and about a fifth axis of rotation (15b) fixed to said first connecting rod (15);
- such that translation of the transverse bar (14) in said slot (16) causes a rotation of said first connecting rod (15) and a rotation of said second connecting rod (17), the rotation of the first connecting rod being in a direction opposite that of the rotation of the second connecting rod.

7. The chair as claimed in any one of the preceding claims, comprising at least one of the following features:
- during pivoting between the first seat position and the second seat position, the seat (10) rotates, about the first axis of rotation (10a), through a first rotation angle (θ₁₀) of between 20° and 80°;
- during pivoting between the first backrest position and the second backrest position, the backrest (20) rotates, about the second axis of rotation (20a), through a second rotation angle (θ₂₀) of between 60° and 130°.

8. The chair as claimed in any one of the preceding claims, in which the backrest extends between a proximal end (20.3) and a distal end (20.4), the backrest comprising a headrest support (25) which is arranged at the level of said distal end (20.4) and of which the distance to said proximal end (20.3) can vary.

9. The chair as claimed in any one of the preceding claims, comprising an axis of rotation which is transverse to said first seat plane (P₁₀₋₁) and about which the chair can turn, in either one of the seating and support configurations.

10. The chair as claimed in any one of the preceding claims, resting on a chassis (3), the chair being mobile in translation with respect to said chassis, so as to move closer to or further from said chassis.

11. The chair as claimed in the preceding claim, the chair being fixed to a frame (30) such that the assembly forming the chair (1) and the frame (30) is mobile in translation with respect to said chassis (3).

12. An agricultural device that is able to move over ground, comprising a chair as claimed in any one of the preceding claims.
